# EUROPEAN PATENT APPLICATION

(11) **EP 3 996 020 A1**
(43) Date of publication of application: **11.05.2022**
(21) Application number: 20205790.7
(22) Date of filing: 04.11.2020
(51) Int. Cl.: G06Q 20/06, G06Q 20/36, G06Q 30/02

(54) **A COMPUTER-IMPLEMENTED METHOD OF CREATING AND EXCHANGING CONTRACTS CONTAINING BENEFITS, IN PARTICULAR EMPLOYEE BENEFITS, IN THE FORM OF TOKENS CONTAINING EVOUCHERS, IMPLEMENTED WITH THE USE OF COMPUTER NETWORKS AND THE LAYOUT OF DEVICES DESIGNED TO IMPLEMENT THIS METHOD**

(71) Applicant: MC2 Innovationns Sp. z o.o., 00-075 Warszawa (PL)
(72) Inventor: Stre y ska, Anna, 00-075 Warszawa (PL); Szczebiot, Arkadiusz, 00-075 Warszawa (PL)
(74) Representative: Jedrzejewski, Michal

(57) **Abstract**

A computer-delivered method for the creation and exchange between users of contracts with benefits in the form of tokens containing evouchers, delivered by computer networks, a network device with a chip, and a device reading the data from the computer.

## Description

The invention consists in a computer-delivered method for the creation and exchange between users of contracts with benefits, in particular employee benefits, in the form of tokens containing evouchers, implemented using computer networks, and a system of devices to implement that method.

Document US2016239807 A1 describes the method of facilitating and monitoring transactions relating to the purchase of benefits and/or incentives sponsored by the party to the contract, the employer in particular. The method may apply to the motivational or loyalty contract in particular, and the method described in the document, in order to maintain clarity of reasoning, is based on the employer-employee relation and the motivational platform for employees.

In this example, the motivational Platform processes and/or facilitates the processing of device user-related profile information to establish the user status as the employer's employee. The motivational platform also determines the status of the employer's request to purchase a benefit, an item or their combination from the service provider as the employer-sponsored benefit, user's participation level or their combination, depending on the user status. In addition, the motivational platform initiates the request for the purchase of a benefit, item or their combination on behalf of the user on the basis of the motivational policy set by the employer, the request status, participation level, or their combination.

Document PL429326 describes a computer-delivered method for the creation and exchange between users of contracts for employee benefits using computer networks, where the contracts consist of tokens which are dedicated digital carriers of value and of definitions of benefits that can be redeemed using tokens, which benefits can be both virtual and material, whereas the tokens are created on the basis of products or services offered by an external partner or by an external partner offering those products or services.

There are no solutions among those currently known that would provide benefits that enable digitisation of external partner vouchers and represent a potential alternative to pre-paid cards without it being necessary to use the infrastructure of card operators. In this method, it is not the external partner that delivers evouchers or codes, as is the case at present, but rather they are created by a central system, which displays them on the user's device.

The computer-delivered method for the creation and exchange between users of contracts with benefits in the form of tokens containing evouchers is delivered by computer networks, a network device with a chip, and a device reading the data from the computer, and covers the following stages
a) generation, by the chip, of a unique token with a benefit or other values assigned to that token,
b) perfomance of the contract using the blockchain between the issuing entity (organisation) and the token holder (user) or among the various token holders (users)
c) recording in the contract of the definitions of benefits referred to in letter a) above, that can be granted to the token holder using a specific number of tokens, whereas those benefits can be both virtual and material and should represent value that the entity may offer to the token holder, whereas the token may be a part of assets that is indivisible in nature,
whereas the contracts comprise:
a) tokens which are dedicated digital carriers of value,
b) definitions of benefits in the form of evouchers for products or services of external partners,
whereas the method according to the invention is characterised by the fact that
1) the system user has tokens in their account, where selected tokens may be used for dynamic redemption to pay for products/services of selected external partners, whereas
   a) specific limits may be determined for specific tokens:
      i. that they can be used to pay for an evoucher only at a specific time and/or
      ii. that they can be used to generate evouchers only for selected merchants
      iii. transaction limits for the use of specific tokens for token conversion to evouchers
   whereas the evoucher is in the form of an alphanumerical and/or bar code in a set format determined by the external partner, which can be displayed on the user's mobile device as a QR code/barcode for automatic reading in the cash register system of the external partner, whereas the evoucher is dynamically generated by the user's device or central system when it is needed by the user for redemption, whereas the evoucher has a specific validity time from the time of generation, after which it is deactivated.
   whereas the evoucher is transferred and recorded in the central system on its generation and becomes automatically active for potential redemption;
2) then the user may use the active evoucher at a point of sale of the external partner, in particular in a retail outlet or on a website,
3) upon the user's transfer of the evoucher for redemption, the external partner's cash register system generates a predetermined dynamic transaction identifier, and then sends the identifier along with the transaction amount to the central system where:
   a) it is reviewed whether the dynamic identifier is correct and what user it pertains to,
   b) the number of tokens that the user has available to pay for a given transaction;
4) then the central system sends to the user's device a message with the following details:
   a) data of the external partner
   b) amount to be paid,
   c) available tokens with the assigned amount that can be paid with the evoucher;
5) the user may approve, reject the payment or modify it within the available tokens;
6) when the confirmation is received from the user, the central system uses the evoucher and sends to the partner the information with the amount by which the transaction between the user and the external partner is to be reduced, reducing accordingly the value "for payment" in the current transaction.
   It is beneficial in implementing the method according to the invention that:
   1) the external partner logs on to an additional discounts module, and then defines the discounts available to users by selecting from the following available parameters:
      a) discounts on the purchase value,
      b) discounts for specific days of the week,
      c) for a range of dates,
      d) specific percentage-rate discount,
      e) specific availability channel of the discount, in particular a web store and/or physical store
      f) limit for a single user over a specific time,
      g) discounts for specific products
      h) quantity discounts, such as the discount being available when a specific number of products is purchased,
      i) combined discounts, such as the discount being available when specific products are purchased,
         1) the user executes the transaction using the evoucher;
         2) the cash register / online system of the external partner sends to the central system the information with the identifier of the external partner, the identifier of the evoucher used and the purchase value;
         3) the central system reviews the configuration of discounts assigned to a given user;
         4) the user makes the payment reduced by the evoucher's value,
         5) information about the payment is submitted to the central system, where the central system calls the cash-back function and sends to the user's account the value of the discount in the form of the relevant number of tokens, and then notifies the user that the discount has been used and what its amount has been.

Beneficially, the user, in the course of the transaction, is notified of the discount available to them for acceptance or rejection.

In another aspect, the invention consists in a system of devices configured to implement the method specified above.

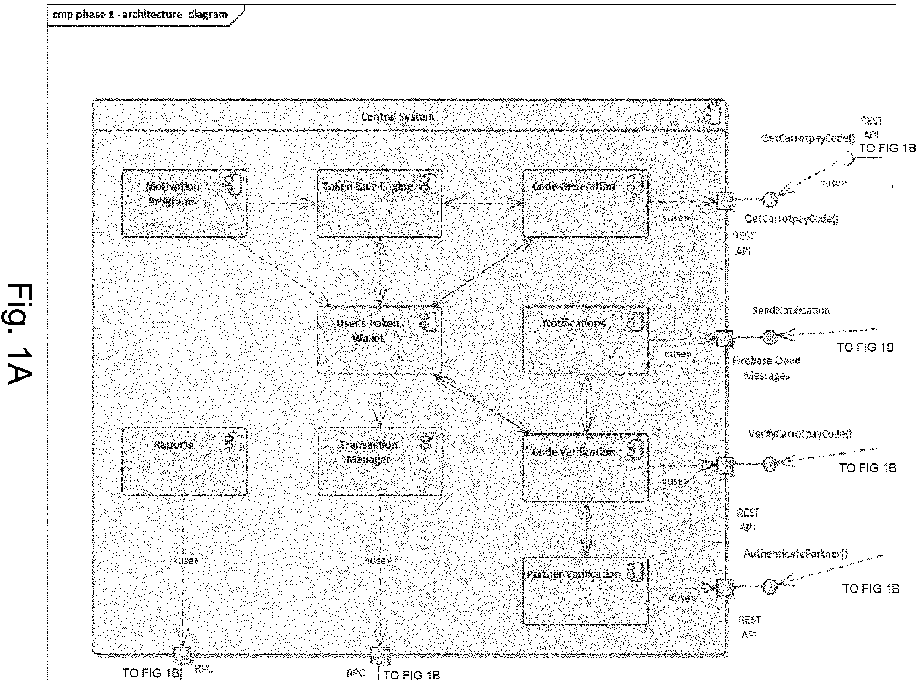

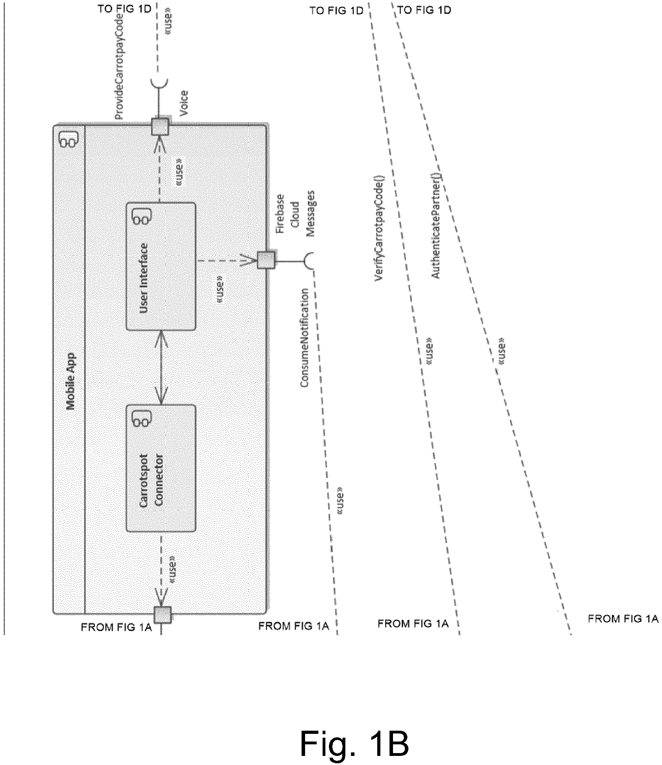

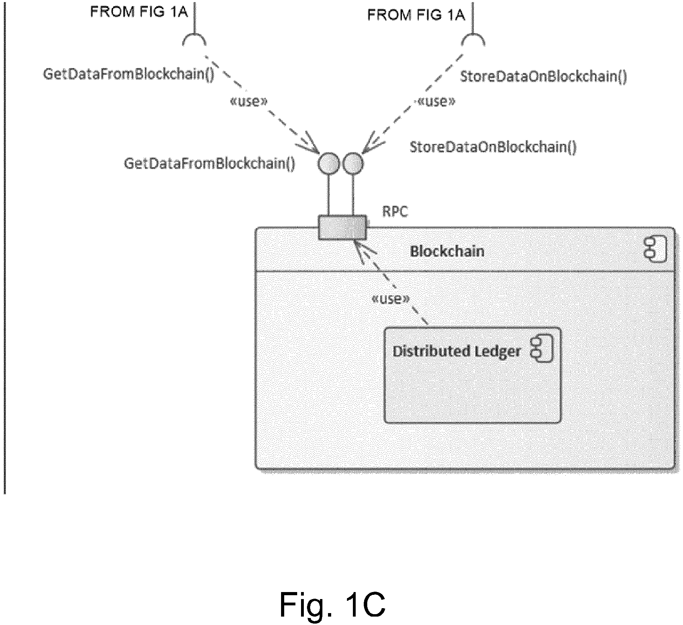

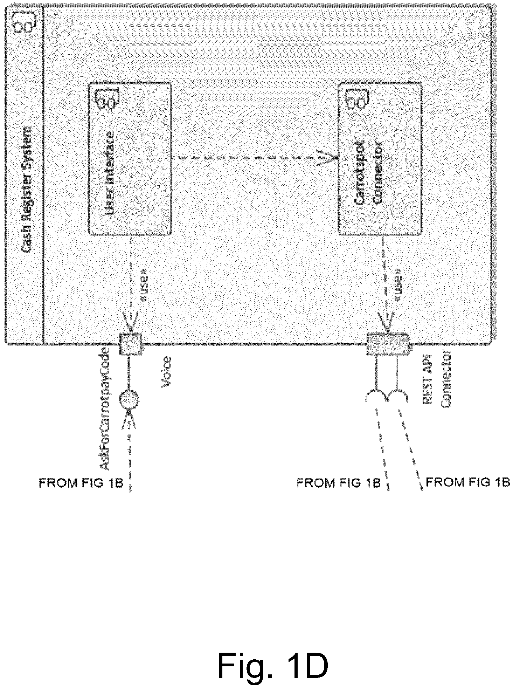

The object of the invention is shown on examples on the figure, where fig. 1 shows an example architecture diagram of the system of devices used to implement the method according to the invention.

In the method in question, the system user has various tokens in their account, where selected tokens may be used for dynamic redemption to pay for products/services of selected external partners
a) specific limits are determined for specific tokens:
   i. that they can be used to pay for an evoucher only at a specific time (e.g. business days)
   ii. that they can be used to generate evouchers only for selected merchants
   iii. transaction limits for the use of specific tokens (e.g. one-off or daily) for token conversion to evouchers

The evoucher is in the form of an alphanumerical and/or bar code in a set format (depending on the external partner) which can be displayed on the user's mobile device as a QR code/barcode for automatic reading in the cash register system of the external partner (alternatively: read out from the screen to the cash register operator)

The evoucher is generated dynamically when needed by the User. Therefore, it is not the Merchant that delivers evouchers and codes, as is the case at present, but rather they are created by a central system which displays them in the application on the user's device.

The evoucher has a specific validity time from the moment it is generated. After that time, it is deactivated.

The evoucher (the code, the property right assigned to a specific user, validity date) is recorded in the central system on its generation and becomes automatically active for potential redemption

The user may use the active evoucher at a point of sale of the external partner (a retail outlet or a website). The user must decide on whether to use the evoucher during the payment procedure, verbally informing the cash register operator or making the payment method selection in the online system of the external partner. The cash register operator then selects the "evoucher" payment method and receives the evoucher from the User (generated by the user in the mobile application) by scanning the bar code from the user's screen or by entering the provided code on the cash register keypad.

Then, the cash register (or online) system of the Merchant sends the identifier along with the transaction amount to the central system where:
b) It is reviewed whether the dynamic identifier is correct and what user it pertains to
c) The number of tokens that the user has available to pay for a given transaction
d) It sends the information (Merchant, amount to pay, available tokens = how much you can pay with the evoucher) to the user's mobile device.

The user may accept or reject that payment. They can also change the evoucher value within the available tokens (that is select to pay only 50 out of 70 available tokens using the evoucher).

When the confirmation is received from the user, the central system uses the evoucher, reducing accordingly the value "for payment" in the current transaction.

An important parameter of the entire workflow is the response time of the central system (should be as quick as possible). In the solution in question, the respective activities take place nearly in real time.

In addition, on the basis of the evouchers used, the system generates reports (per Partner) which are the basis for the settlements of payments with the partners.

In a beneficial example of the implementation, the external partner logs on to an additional discounts module, and then defines the discounts available to users by selecting from the following available parameters:
a) discounts on the purchase value,
b) discounts for specific days of the week,
c) for a range of dates,
d) specific percentage-rate discount,
e) specific availability channel of the discount, in particular a web store and/or physical store
f) limit for a single user over a specific time,
g) discounts for specific products
h) quantity discounts, such as the discount being available when a specific number of products is purchased,
i) combined discounts, such as the discount being available when specific products are purchased,

The user performs the transaction described above using the evoucher, and the cash register / online system of the external partner sends to the central system the information with the identifier of the external partner, the identifier of the evoucher used and the purchase value. The central system reviews the configuration of discounts assigned to a given user. The user makes the payment reduced by the evoucher's value. Information about the payment is submitted to the central system, where the central system calls the cash-back function and sends to the user's account the value of the discount in the form of the relevant number of tokens, and then notifies the user that the discount has been used and what its amount has been.

In addition, the system may be configured so that the user, in real time in the course of the transaction, is notified of the discount available to them for acceptance or rejection. The method and system according to the invention is targeted primarily, though not exclusively, at large and medium-sized enterprises (more than 250 employees), but can be used by any organisation regardless of its size.

The following modules can be distinguished in the method and system according to the invention:
1. Module for defining and creating customised benefits in the form of tokens
2. Module for direct transfer of tokens between users,
3. Module for internal exchange, sale and purchase of tokens,
4. Module for indicating user preferences in the context of benefits redeemed,
5. Module supporting legal aspects of the created token templates,
6. Module for integration with external service providers (partners) in the form of benefits (the module may be additionally provided with a discounts module);
7. Module supporting unquestionable and verifiable linking of tokens once assigned to the user's portfolio.
8. Module enabling payment for access to the platform implementing the method according to the invention (subscription model),
9. Module for acquisition and analysis of quantitative and qualitative data on the staff motivation level and loyalty, with indication of benefit distribution and utilisation rate, and impact on indicators measuring the effectiveness of motivation and loyalty processes.

The token is the main unit that represents a reward that can be obtained by one or more users. In other words, the token is the business definition of a single benefit or it's part. Tokens are distributed from the pool of tokens supported in an organisation.

The tokens are characterised by attributed describing their internal logic. Properties can also be assigned to tokens, which describe their particular behaviour. The use of both their attributes determining their static structure and dynamic properties enables the creation of a new token version.

Tokens are always held by users. They are a virtual currency in the ecosystem.

Legal documents may be assigned to tokens that determine e.g. the method of their use, and confirm that the use complies with the applicable laws at the national and organisational level, or with the ethical code of conduct. Legal documentation may provide a certification that the applicable regulations have been reviewed from the perspective of using the token by the organisation that manages the benefit system.

Tokens may have specific version statuses, e.g.: draft, final.

Additional logical concepts are connected to the tokens, such as the balance and balance of permits, that govern the distribution rules.

Types of token use are defined by four primary models: (1) permanent, (2) circulating, (3) single transfer, (4) external. Types of token use are described in detail in chapter 4. Tokens may also be specified by category markers, which refer to the adaptation of the token's benefits to the needs of a given user.

Tokens may be generated on the basis of token templates, which are forms for token definitions. The template identifies the primary classes of behaviour and is used to facilitate entry of tokens into circulation. Templates may be combined with document templates.

One or more token pools can be generated on the basis of the template. Using editing options and settings, the pools may differ between themselves in many aspects. From that perspective, tokens created in various pools from a single template may inherit attributes, but also modify some of them.

In the system and method according to the invention, five primary groups of entities are envisaged: administrator, manager, user, external partner, HR partner.

The administrator administers the system at the technical and business level.

The manager receives tokens from the administrator and assigns them to users according to the predetermined rules or at the manager's own discretion. The manager occupies a higher level in the organisational structure than users.

The user is the entity rewarded with tokens by the manager, and then applying them in various ways (e.g. by redeeming them for themselves, by offering tokens as a gift to other users, or exchanging them on the internal token exchange).

The external partner is the entity providing services/benefits to users, such as e.g. medical care, sports packages, reimbursed travel costs. The external partner can create its own tokens, issue them in the ecosystem and offer them to other organisations.

The HR partner is a person representing the company creating token templates, which are used by administrators in the token pool activation process.

The administrator plays a key role in the execution of the following processes:
- creation of a new token,
- token activation on the basis of the token template,
- assignment of token distribution rights to the manager,
- reclaim of token distribution rights from the manager.

The manager plays a key role in the execution of the following processes:
- assignment of token distribution rights to another manager, who occupies a lower level in the organisational structure,
- reclaim of token distribution rights from another manager, who occupies a lower level in the organisational structure,
- assignment of tokens to users.

The user (e.g. an employee) plays a key role in the execution of the following processes:
- token utilisation/redemption,
- transfer of tokens to another user as a gift,
- exchange of tokens on the internal token exchange.

The external partner plays a key role in the execution of the following processes:
- creation of a new token,
- definition of the price list specifying the number of tokens for the respective services from the list of provided services,
- activation of tokens for transfer to the administrator.

The HR partner plays a key role in the execution of the following processes:
- creation of a new token template,
- definition of the price list for the utilisation of the token template.

Both members of the organisation (administrator, manager, user) and partners (external and HR) have the option to: review token details, e.g. token parameters and legal documents enclosed with the token specification, and to view the history of token transactions.

The administrator can create a new pool of tokens or activate it on the basis of the token template available in the database (portfolio) of the organisation's templates. The administrator enters token parameter values (e.g. token name, logo, total number of tokens for distribution, expiry date) or accepts default values of its parameters and the related legal documents. Token parameters affect the token's behaviour in the system.

The administrator is also authorised to assign to managers rights to further assign the right to distribute tokens to other managers, or to reward users. It should be noted that the pool of tokens indicated for the assignment of rights to tokens may not be empty. After the assignment of rights to distribution, tokens remain in the pool of the organisation, but are reserved and assigned to the selected managers.

The administrator has the option of taking back distribution rights from managers. It should be clarified that if the rights assigned before were partially used by the manager (by further assignment of the rights to another manager or by transfer of tokens to end users), the administrator may only claim back the distribution right for the unused pool of the tokens. When the right is used for all tokens, it is not possible to cancel the distribution right.

The manager, similarly to the administrator, can assign and take back the rights to/from another manager. If the rights are assigned, the authorised entity must occupy a lower level in the organisation than the entity assigning the rights.

The manager can also assign tokens to users as rewards. In that procedure, the manager declares the number and type of tokens, and names of users to be rewarded. The transfer is possible only if the number of tokens for distribution in a pool of tokens is not exceeded.

The user has the right to use the tokens in their personal portfolio of tokens. The user may use the tokens for themselves and use the benefits assigned to the tokens. The user may transfer the tokens to another user as a gift or exchange them for other token categories on the internal token exchange.

The HR partner has the right to create a new token template for proposed details of a motivational method. In preparing the token template specification, the HR partner defines the token template price, which specifies the monetary value for a given template use by the administrator.

Technical protections of the method and system according to the invention exist at multiple levels on the following assumptions:
- Architecture level:
   ∘ The platform comprises three independent layers:
      ▪ business logic layer based on the microservice architecture model,
      ▪ data layer comprising databases relating to the respective microservices,
      ▪ presentation layer comprising the end user and organisation administrator front-end with communication over the API interface (see: chapter 6).
   ∘ The communication uses only the required ports and protocols used for communication between components of the architecture according to the invention. In addition, the application does not use protocols considered dangerous, such as FTP or NFS.
   ∘ The source code of the application does not contain any confidential information from the business logic layer and any secret / private keys or other confidential data.
   ∘ Access to the data is restricted at the database level rather than at the application level. The application does not have any administrator rights to the database.
   ∘ Each microservice has its account, which has rights assigned only to its own database, and does not have the database administrator rights.
   ∘ Access to organisational data is restricted at the application level rather than at the database level.
   ∘ The interface between the application and the WWW net is protected by a firewall.
- Authentication and authorisation level:
   ∘ All users and all resources on the platform require a default pre-authentication.
   ∘ Authentication data fields are not automatically filled by the application.
   ∘ All users authentications are on the server end.
   ∘ All authentication mechanisms that result in a failure work in a safe manner to ensure that the attacker cannot log on to the system.
   ∘ All authentication operations, such as registration, profile update, login and password resend, which result in the recovery of access to the account, have at least the same protections as the basic authentication mechanisms.
   ∘ All logon attempts are stored without confidential session identifiers or passwords.
   ∘ Passwords for accounts are stored using a one-way acronym function with cryptographic salt? and are sufficiently complex to defend attacks and password recovery from its acronym.
   ∘ Authentication data are sent using an encrypted link and all pages/functions which require the user to provide authentication require such link encryption.
   ∘ The password recovery mechanism does not disclose previous passwords and the new password is not sent to the user in an open form.
   ∘ The application and other components it uses does not use default passwords (e.g. admin/password).
   ∘ All authentication data used for obtaining access to services that are external to the application are encrypted and stored in a secured location. No other data types are stored or encoded in the source code.
   ∘ The password recovery function is delivered by sending a token with a limited time over electronic mail.
   ∘ The application temporarily blocks access after at least 5 incorrectly entered passwords. The administrator has the option of blocking users in special cases.
   ∘ Keys or other authenticating information is not recorded in the source code or Application code repositories.
   ∘ The administration interface of the software implementing the method according to the invention is not available from the level of non-trusted networks (e.g. the Internet) or is secured by double authentication.
- Session management:
   ∘ The application does not use non-standard session managers. Spring is used to ensure security instead of a standard session manager.
   ∘ Sessions are cancelled after the user has logged out.
   ∘ Sessions are automatically deactivated after a specific idle time of the user.
   ∘ Each successful authentication, and re-authentication, creates a new session.
   ∘ The platform uses at least 128-bit, safe session IDs, which are random and unique within the relevant active session database.
   ∘ The application is provided in the SaaS model and in effect no installation on the client's premises is required.
   ∘ Any potentially dangerous content is removed from message templates.
   ∘ The application does not modify any data sent by users through application forms. All attached files are verified (e.g. execution files, such as .exe or .msi are not permitted). However, there is no virus scanning.
   ∘ The users may only perform actions defined by their profiles.

Three functional blocks should be distinguished in the static model: (1) Front-end applications, (2) Back-end service mesh and (3) External services.

### Front-End Apps

Description: group of applications with the user interface. None of the applications has its own back-end layer. Thee function is performed by the front-end (SPA/mobile) calling API at the central point (API Portal).

| Name | Function | Role |
|---|---|---|
| Mobile application | Mobile client application | Manager, user, external partner or HR |
| Administrator Application | Network application dedicated to the administrator. Application allows technical actions, in particular: creation of organisation, creation of a pool of tokens, assignment of rights, support of emergencies. | Administrator |
| Manager/User Portal | The application intended for business users (manager, user). Portal allows to perform operations that correspond to the rights of a logged-on user (e.g. transaction history in the Manager Panel; account balance view, history of own transactions - in the User Panel). | Manager, user |
| Partner Portal | The application intended for users with an assigned partner role. Through the portal, operations that correspond to the rights of a logged-on user (e.g. details of the created token, transaction history for the created and activated token). | External partner or HR |
| Landing page | Marketing application. It does not make available functionalities relating to the system role, but instead presents the system's potential and encourages to register. | All |
| Analytical module | An external module with options for advanced analysis on the basis of information collected through the implementation of the method according to the invention | Administrator |
| Service Desk module | Help desk module providing access to support for the platform administrators. It offers e.g., access to the knowledge base, discussion forum and option to make service requests. | Administrator |

### Back-End Service Mesh

Description: mesh of microservices executing API calls.

| Name | Function | Technology |
|---|---|---|
| API Portal | Aggregation of services, single point of access to the user application. | Spring Boot |
| User service | Ensuring a homogeneous mechanism for access to user data. Full scope of information about the user comprises the data from: IdP, User Service, and Organisation Service. | Spring Boot |
| Organisation Service | Providing access to the Organisation data at the reading and management level. | Spring Boot |
| Blockchain service | Delivery of access to the business logic. The service enables the application of the blockchain functionality through a standard call interface. | Spring Boot |
| Storage Service | Adapter to an external data storage service. | Spring Boot |
| Communication Service | Adapter to external communication services (e-mail, push, etc.) | Spring Boot |

### External Services

Description: External SaaS services, launched in a stream of CS service calls.

| Name | Function |
|---|---|
| Identity provider | Authorisation server |
| CRM | CRM server |
| Cloud-based data storage | Cloud-based data repository |
| E-mail sending service | E-mail sending service |
| Notification service | Notification service |

It was found in the user satisfaction level tests performed for the method according to the invention that more than 90% of the subjects (users and external partners) were satisfied with its operation, in particular considered that it simplified and streamlined the evoucher redemption process.

## Claims

1. Computer-delivered method for the creation and exchange between users of contracts with benefits in the form of tokens containing evouchers is delivered by computer networks, a network device with a chip, and a device reading the data from the computer, whereas the method covers the following stages:
d) generation, by the chip, of a unique token with an employee benefit assigned to that token,
e) performance of the contract using the blockchain between the issuing entity (organisation) to the token holder (user) or among the various token holders (users)
f) recording in the contract of the definitions of benefits referred to in letter a) above, that can be granted to the token holder using a specific number of tokens, whereas those benefits can be both virtual and material and should represent value that the entity may offer to the token holder, whereas the token may be a part of assets that is indivisible in nature,
whereas the contracts comprise:
a) tokens which are dedicated digital carriers of value,
b) definitions of benefits in the form of evouchers for products or services of external partners, **characterised in that**
1) the system user has tokens in their account, where selected tokens may be used for dynamic redemption to pay for products/services of selected external partners, whereas
a) specific limits may be determined for specific tokens:
i. that they can be used to pay for an evoucher only at a specific time and/or
ii. that they can be used to generate evouchers only for selected merchants
iii. transaction limits for the use of specific tokens for token conversion to evouchers
whereas the evoucher is in the form of an alphanumerical and/or bar code in a set format set by the external partner, which can be displayed on the user's mobile device as a QR code/barcode for automatic reading in the cash register system of the external partner,
whereas the evoucher is generated dynamically by the user's device when needed by the User,
whereas the evoucher has a specific validity time from the moment it is generated, after which it is deactivated.
whereas the evoucher is transferred and recorded in the central system on its generation and becomes automatically active for potential redemption;
2) then the user may use the active evoucher at a point of sale of the external partner, in particular in a retail outlet or on a website,
3) upon the user's transfer of the evoucher for redemption, the external partner's cash register system generates a predetermined dynamic transaction identifier, and then sends the identifier along with the transaction amount to the central system where:
a) it is reviewed whether the dynamic identifier is correct and what user it pertains to,
b) the number of tokens that the user has available is sufficient to pay for a given transaction;
4) then the central system sends to the user's device a message with the following details:
a) data of the external partner
b) amount to be paid,
c) available tokens with the assigned amount that can be paid with the evoucher;
5) the user may approve, reject the payment or modify it within the available tokens;
6) when the confirmation is received from the user, the central system uses the evoucher and sends to the partner the information with the amount by which the transaction between the user and the external partner is to be reduced, reducing accordingly the value "to pay" in the current transaction.

2. The method according to claim 1, **is characterised in that:**
1) the external partner logs on to an additional discounts module, and then defines the discounts available to users by selecting from the following available parameters:
j) discounts on the purchase value,
k) discounts for specific days of the week,
I) for a range of dates,
m) specific percentage-rate discount,
n) specific availability channel of the discount, in particular a web store and/or physical store
o) limit for a single user over a specific time,
p) discounts for specific products
q) quantity discounts, such as the discount being available when a specific number of products is purchased,
r) combined discounts, such as the discount being available when specific products are purchased,
2) the user executes the transaction using the evoucher;
3) the cash register / online system of the external partner sends to the central system the information with the identifier of the external partner, the identifier of the evoucher used and the purchase value;
4) the central system reviews the configuration of discounts assigned to a given user;
5) the user makes the payment reduced by the evoucher's value,
6) information about the payment is submitted to the central system, where the central system calls the cash-back function and sends to the user's account the value of the discount in the form of the relevant number of tokens, and then notifies the user that the discount has been used and what its amount has been.

3. The method according to claim 3 **is characterised in that** the user, in the course of the transaction, is notified in real time of the discount available to them for acceptance or rejection.

4. The system of devices comprising network devices with a chip and devices reading data from the computer, configured to implement the method specified in claims 1-3.
